# EUROPÄISCHE PATENTSCHRIFT

(11) **EP 2 987 643 B1**
(45) Veröffentlichungstag und Bekanntmachung des Hinweises auf die Patenterteilung: **25.10.2017**
(21) Anmeldenummer: 15002378.6
(22) Anmeldetag: 10.08.2015
(51) Int. Cl.: B42D 25/425, B42D 25/29, B42D 25/324, B42D 25/342, B23K 26/00, B41M 5/26, B42D 25/41, B23K 26/53

(54) **SICHERHEITSELEMENT MIT KIPPEFFEKT**
SECURITY ELEMENT WITH TILT EFFECT
ÉLEMENT DE SECURITE AVEC EFFET DE BASCULEMENT

(30) Priorität: 18.08.2014 DE 102014012207
(43) Veröffentlichungstag der Anmeldung: 24.02.2016
(73) Patentinhaber: Giesecke+Devrient Currency Technology GmbH, 81677 München (DE)
(72) Erfinder: Reiner, Harald, 81371 München (DE); Franz, Peter, 85567 Pienzenau/Bruck (DE); Mayer, Karlheinz, 88167 Grünenbach (DE)

(56) Entgegenhaltungen:
- WO-A1-2014/089710
- WO-A1-2014/096794
- GB-A- 2 495 629

## Beschreibung

Die Erfindung betrifft ein Sicherheitselement sowie ein Verfahren zur Herstellung eines Sicherheitselements, das aus einem Substrat mit einer optisch variablen Struktur aus Strukturelementen besteht. Die Strukturelemente werden mit einer zur Oberfläche des Sicherheitselements kontrastierenden Beschichtung so kombiniert, dass wenigstens Teilbereiche der Beschichtung bei Betrachtung aus einem ersten Betrachtungswinkelbereich sichtbar sind, bei Betrachtung unter einem zweiten Betrachtungswinkelbereich aber durch die Strukturelemente zumindest teilweise verdeckt werden, so dass bei Kippen des Sicherheitselementes um eine Achse ein Kippeffekt erzeugt wird. Hierbei werden die Strukturelemente durch eine Volumenänderung der Oberfläche des Substrats des Sicherheitselements erzeugt und werden aus einem Raster von linienförmigen, gegenüber der Oberfläche des Substrats erhabenen Elementen gebildet. Die Beschichtung wird aus einem Raster von linienförmigen Elementen gebildet.

Hierzu ist beispielsweise aus der WO 2004/ 009371 A1 ein Wertdokument, wie zum Beispiel eine Banknote oder dergleichen, und ein Verfahren zu dessen Herstellung bekannt, das ein Sicherheitspapier mit wenigstens einer fühlbaren Markierung in Form einer Volumenänderung bzw. einer Reliefstruktur aufweist, die mittels eines Lasers erzeugt wird. Diese Reliefstruktur wird in Form eines Linienreliefs ausgeführt und mit einem Aufdruck aus farbigen Linien so kombiniert, dass die farbigen Linien parallel zur Reliefstruktur angeordnet sind und auf jeweils einer Flanke des Reliefs zu liegen kommen. Bei Variation des Betrachtungswinkels ergeben sich hierbei aufgrund eines Abschattungseffekts unterschiedliche visuelle Eindrücke, es entsteht ein sogenannter Kippeffekt.

Aus WO 2014/089710 A1 ist ein Sicherheitselement für ein Sicherheitsdokument bekannt, das ein erstes, zweites, drittes und viertes jeweils zur Substratoberfläche kontrastierendes Linienraster umfasst, das jeweils zu einem Muster umfassend eine Prägestruktur des Substrats zugeordnet ist. Ein erster, zweiter, dritter und vierter Musterwinkel unterscheiden sich voneinander. Eine erste Sicherheitsinformation ist als eine örtliche Verteilung des ersten und des zweiten Musters codiert, eine zweite Sicherheitsinformation ist als eine örtliche Verteilung des dritten und des vierten Musters codiert. Die erste und die zweite Sicherheitsinformation überlappen sich dabei. Durch eine Anordnung des ersten und des zweiten Musters in ersten Rasterzellen und durch eine Anordnung des dritten und des vierten Musters in zweiten Rasterzellen und durch eine abwechselnde Anordnung der ersten und zweiten Rasterzellen ergeben sich aus unterschiedlichen Betrachtungsrichtungen des Sicherheitsdokuments spezifische Intensitätsverteilungen, welche zur Echtheitsprüfung herangezogen werden können.

Der Erfindung liegt die Aufgabe zugrunde, ein gattungsgemäßes Sicherheitselement und ein Verfahren zu dessen Herstellung zur Verfügung zu stellen, bei dem der Schutz gegenüber Fälschungen des Sicherheitselements weiter erhöht wird.

Diese Aufgabe wird durch die Merkmale der unabhängigen Ansprüche gelöst. Weiterbildungen der Erfindung sind Gegenstand der abhängigen Ansprüche.

Erfindungsgemäß werden die linienförmigen Elemente der Beschichtung bei senkrechter Betrachtung auf das Substrat (Draufsicht) mit einem Winkel von mindestens 1° zu den linienförmigen Elementen der Strukturelemente angeordnet, so dass der Kippeffekt durch einen Moire-Effekt erzeugt wird.

Der Moire-Effekt zeigt beispielsweise farbige Streifen, mit einem Farbübergang oder Farbverlauf zwischen den verschiedenen Farben der linienförmigen Elemente der Beschichtung bei Verkippen des Substrats. Dieser Moire-Effekt entsteht dadurch, dass die linienförmigen Elemente der Strukturelemente schräg zu den linienförmigen Elementen der Beschichtung verlaufen, so dass eine Linie der Beschichtung schräg über mindestens ein Strukturelement und damit über beide Flanken des Strukturelements verläuft. Beim Verkippen des Substrats bewegt sich somit eine Farbe scheinbar von einer Seite bzw. Flanke des Strukturelements auf die andere Seite.

Ein derartiger Moire-Effekt entsteht insbesondere dann nicht, wenn die linienförmigen Elemente der Beschichtung parallel zu den linienförmigen Elementen der Strukturelemente angeordnet sind, d.h. mit einem Winkel von 0° oder mit einem derart geringen Winkel, dass jede Linie der Beschichtung lediglich auf einer Flanke eines Strukturelements zu liegen kommt. In diesem Fall sind die linienförmigen Elemente der Beschichtung nämlich parallel bzw. nahezu parallel zu den Flanken der Strukturelemente angeordnet, so dass beim Verkippen des Substrats ein vollständiger und abrupter Wechsel von einer Farbe zu einer anderen Farbe sichtbar wird.

Der Winkel zwischen den linienförmigen Elementen der Strukturelemente und den linienförmigen Elementen der Beschichtung beträgt mindestens 1°, bevorzugt 1° bis 45°, besonders bevorzugt 3° bis 40°, ganz besonders bevorzugt 5° bis 35°,10° bis 35° oder 15° bis 35°. Der entsprechend zu wählende Winkelbereich ist unter anderem abhängig von der gesamten Breite des Sicherheitselements bzw. des gewünschten Effektes. Grundsätzlich gilt, dass bei einem bestimmten Kippeffekt, beispielsweise einem Farbverlauf von Rot nach Grün über Blau, der Winkel umso kleiner gewählt werden muss, je breiter das Sicherheitselement ist. Soll ein mehrfacher Farbverlauf erfolgen, der beispielsweise mehrfach den Farbverlauf von Rot nach Grün über Blau zeigt, muss ein größerer Winkel gewählt werden.

Selbstverständlich hängt der Winkel auch von der Breite des einzelnen linienförmigen Elements der Strukturelemente und dem Abstand der Strukturelemente untereinander ab. Je größer diese Breite und dieser Abstand ist, desto größer muss der Winkel sein, um einen bestimmten Kippeffekt oder Farbverlauf zu erzeugen.

Bei einem Winkel zwischen den linienförmigen Elementen der Strukturelemente und den linienförmigen Elementen der Beschichtung von 15° bis 30° ergibt sich besonders bevorzugt ein sogenanntes "rapid movement", bei dem bereits bei geringfügigem Verkippen des Sicherheitselements für einen Betrachter der Eindruck eines sich schnell auf dem Substrat ändernden Farbeindrucks bzw. Farbverlaufs ergibt. Ebenso können gegenläufige Winkelanlagen in Teilbereichen zu einer Verstärkung des Bewegungseffektes führen, da zwei gegenläufige Bewegungen stärker wahrgenommen werden.

Die linienförmigen Elemente der Beschichtung weisen gemäß einer bevorzugten Ausführungsform eine Linienbreite von 30 µm bis 1000 µm und besonders bevorzugt von 50 µm bis 200 µm auf. Die linienförmigen Elemente der Strukturelemente weisen gemäß einer bevorzugten Ausführungsform eine Linienbreite von 50 µm bis 500 µm und besonders bevorzugt von 100 µm bis 200 µm auf. Die Periode bzw. der Abstand zwischen zwei benachbarten linienförmigen Elementen der Beschichtung oder der Strukturelemente beträgt gemäß einer bevorzugten Ausführungsform 100 µm bis 1500 µm und besonders bevorzugt 500 µm bis 800 µm. Diese Periode ist bevorzugt für alle linienförmigen Elemente der Beschichtung oder für alle Strukturelemente gleich groß. Gemäß einer weiteren bevorzugten Ausführungsform kann die Periode von linienförmigem Element zu linienförmigem Element bzw. von Strukturelement zu Strukturelement leicht unterschiedlich sein, so dass beispielsweise eine zusätzliche Schwebung erzeugt werden kann.

Die gesamte Fläche einer erfindungsgemäßen optisch variablen Struktur sollte bevorzugt mindestens 1 cm² und besonders bevorzugt mindestens 2 cm² betragen, damit auf einer für einen Betrachter ausreichend großen Fläche der optisch variable Effekt erkennbar ist.

Gemäß einer bevorzugten Ausführungsform ist vorgesehen, dass die Volumenänderung durch Aufschäumung oder Auffaserung des Substrats erzeugt wird. Die Volumenänderung wird hierbei bevorzugt durch einen Laserstrahl erzeugt, der auf das Substrat einwirkt. In diesem Fall enthält das Substrat spezielle Absorber, die die Laserstrahlung absorbieren, beispielsweise Titandioxid (TiO₂) Hierbei gilt, dass das Substrat umso mehr aufschäumt bzw. aufquillt oder auffasert, je mehr von diesem Absorber in das Substrat eingebracht wird. Als weiter vorteilhaft hat sich eine geringe Schmauchspur auf dem Substrat gezeigt. Hierbei ist auf eine ausgewogene Schwärzung zu achten. Eine zu starke Schwärzung lässt den Effekt "einfrieren" und kann als solcher nicht mehr als Bewegung wahrgenommen werden.

Der besondere Vorteil der Erzeugung einer Volumenänderung mittels Laserstrahl ist, dass hierbei lediglich eine Seite bzw. Oberfläche des Substrats dauerhaft beeinflusst wird. Die durch Aufschäumung oder Auffaserung des Substrats erzeugte Volumenänderung betrifft bevorzugt nur diejenige Seite des Substrats, die der Laserstrahlung zugewandt ist. Des Weiteren ist die Volumenänderung durch mechanische oder chemische Maßnahmen nicht oder nur mit erhöhtem Aufwand wieder rückgängig zu machen, da sie zu einer Änderung der Struktur, z.B. Auffaserung, des Substrats führt. Des Weiteren kann durch die Laserung eine Individualisierung durchgeführt werden. Hier ist es besonders vorteilhaft, dass durch die Individualisierung beispielsweise in Kombination mit einer Zifferung oder eines graphischen Zeichens der natürliche Schwankungsbereich in der Produktion, der beispielsweise durch Passerschwankungen oder Substratverzerrungen hervorgerufen wird, nicht mehr als solcher wahrgenommen oder von einem Betrachter sogar als positiver oder vorteilhafter Effekt wahrgenommen wird. Werden hingegen derartige Strukturen bzw. Effekte mit aus dem Stand der Technik bekannten Druck- oder Prägeverfahren erzeugt, wird ein bei allen Sicherheitselementen gleiches Farbspiel erwartet, welches jedoch durch die physikalischen Eigenschaften der Druck- und Prägeverfahren nicht gegeben ist und entsprechend kompensiert werden muss.

Selbstverständlich können durch die Individualisierung beispielsweise auch in jedem Sicherheitsdokument, wie beispielsweis einem Ausweisdokument oder einer Kreditkarte, unterschiedliche Portraits oder Passbilder von Personen und/ oder unterschiedliche Seriennummern eingebracht werden, so dass das jeweilige Sicherheitsdokument individualisiert bzw. speziell angepasst auf die entsprechende Person ist. Ebenso können auch Gruppen von Sicherheitsdokumenten individualisiert werden, indem beispielsweise jeweils eine bestimmte Anzahl von Sicherheitsdokumenten jeweils dieselbe Information erhält.

Bei einer Erzeugung der Strukturelemente mittels Prägeverfahren, wie beispielsweise Blindprägung oder Stichtiefdruck, werden hingegen beide Seiten des Substrats beeinflusst, da die Prägung auf die eine Seite des Substrats einwirkt und die Verprägung durch das Substrat hindurch auf die gegenüberliegende Seite des Substrats wirkt. Diese Verprägung ist somit auf beiden Seiten des Substrats sicht- und/ oder fühlbar. Des Weiteren kann sich die Verprägung mit der Zeit aufgrund äußerer Einflüsse, wie beispielsweise mechanischer Einwirkungen, verringern, da das Substrat wieder in seine ursprüngliche ebene und damit unverprägte Form zurückgedrückt wird.

Bei einer Erzeugung der Strukturelemente mittels eines taktil erfassbaren Aufdrucks, der beispielsweise einen Farbauftrag mit einer Dicke von mindestens 20 µm und besonders bevorzugt von mindestens 50 µm aufweist, besteht gegenüber einer Erzeugung mittels Volumenänderung des Substrats der Nachteil, dass dieser Aufdruck mechanisch oder chemisch vom Substrat wieder entfernt werden kann. So verringert sich beispielsweise die Dicke eines taktil erfassbaren bzw. fühlbaren Aufdrucks einer Banknote mit der Dauer des Umlaufs der Banknote, da der Aufdruck durch den Gebrauch der Banknote mechanisch nach und nach abgetragen wird.

Gemäß einer weiteren vorteilhaften Ausgestaltung ist vorgesehen, dass die Teilbereiche der Beschichtung, die bei Betrachtung aus einem ersten Betrachtungswinkelbereich sichtbar sind und bei Betrachtung unter einem zweiten Betrachtungswinkelbereich aber durch die Strukturelemente zumindest teilweise verdeckt werden, mindestens eine Information zeigen. Eine Information im Sinne dieser Erfindung ist eine musterförmig gestaltete und visuell wahrnehmbare Beschichtung. Diese kann beispielsweise eine graphische Abbildung, ein Bild, eine Zahl, ein Buchstabe, ein Text oder sonstige Zeichen bilden. Besonders bevorzugt besteht die Information dabei aus positiven oder/ und negativen Motiven. Bei einem positiven Motiv wird hierbei ein Motivelement selbst auf das Substrat aufgebracht, wohingegen bei einem negativen Motiv der das Motivelement umgebende Bereich auf das Substrat aufgebracht wird. Ein positives Motiv ist beispielsweise ein in dunkler Farbe auf das helle Substrat aufgedruckter Buchstabe. Ein negatives Motiv ist beispielsweise eine in dunkler Farbe auf das Substrat aufgebrachte Fläche, die innerhalb der Fläche einen unbedruckten Bereich in Form eines Buchstabens aufweist.

Besonders zweckmäßig ist es darüber hinaus, wenn in einem ersten Bereich des Sicherheitselements die linienförmigen Elemente der Beschichtung bei senkrechter Betrachtung auf das Substrat mit einem ersten Winkel α₁ zu den linienförmigen Elementen der Strukturelemente angeordnet sind und in einem zweiten Bereich des Sicherheitselements die linienförmigen Elemente der Beschichtung bei senkrechter Betrachtung auf das Substrat mit einem zweiten Winkel α₂ = - α₁ zu den linienförmigen Elementen der Strukturelemente angeordnet sind, wobei der erste Bereich und der zweite Bereich benachbart zueinander angeordnet sind. Hierbei ergibt sich in dem ersten Bereich bei Verkippen des Substrats ein Farbverlauf in eine erste Richtung und gleichzeitig im zweiten Bereich ein Farbverlauf in eine zweite Richtung, wobei die zweite Richtung der ersten Richtung genau entgegengesetzt ist. Beispielsweise ergibt sich bei Verkippen des Substrats um die waagrechte Achse im ersten Bereich ein Farbverlauf von links nach rechts und im zweiten Bereich von rechts nach links. Dadurch, dass die beiden Bereiche benachbart zueinander angeordnet sind, ergeben sich für einen Betrachter somit zwei entgegengesetzt bzw. gegenläufige Farbverläufe.

Benachbart im Sinne dieser Erfindung bedeutet, dass zwei Bereiche aneinandergrenzen oder auch voneinander beabstandet angeordnet sind, wobei der Abstand jedoch lediglich derart groß gewählt werden darf, dass ein Betrachter noch einen direkten Zusammenhang zwischen den Bereichen erkennen kann.

Beispielsweise stellen alle Teilbereiche der Beschichtung, die bei Betrachtung aus einem ersten Betrachtungswinkelbereich sichtbar sind, bei Betrachtung unter einem zweiten Betrachtungswinkelbereich aber durch die Strukturelemente zumindest teilweise verdeckt werden, insgesamt einen Schmetterling dar. Hierbei bildet ein Teilbereich den linken Flügel und ein Teilbereich den rechten Flügel des Schmetterlings, die durch einen Teilbereich voneinander getrennt sind, der den Rumpf des Schmetterlings darstellt. Bei Verkippen des Substrats um die waagrechte Achse ergibt sich im linken Flügel ein Farbverlauf von rechts nach links und im rechten Flügel ein Farbverlauf von links nach rechts. Wird das Substrat wiederholt um seine waagrechte Achse vor- und zurückgekippt, ergibt sich in den Flügeln ein wiederholter und gegenläufiger Farbverlauf in Richtung der waagrechten Achse, der den Flügelschlag des Schmetterlings darstellt.

Gemäß einer weiteren Ausführungsform wird mindestens ein Teil der Beschichtung derart ausgebildet, dass in diesem Teil die Beschichtung durch den Laserstrahl verändert oder abgetragen bzw. verdampft wird. Mindestens ein Teil der Beschichtung ist hierbei so ausgestaltet, dass der Laserstrahl nicht nur das Substrat aufschäumt oder auffasert, sondern auch diesen Teil der Beschichtung verändert, abträgt oder verdampft. Eine Veränderung der Beschichtung wäre hierbei beispielsweise eine Veränderung der Farbe und/ oder der Transluzenz bzw. Lichtdurchlässigkeit der Beschichtung. Besteht die Beschichtung beispielsweise aus einem Linienmuster, bei dem Linien mit roten grünen und blauen Farben aneinandergrenzen, so kann die blaue Farbe absorbierend für infrarote (IR) Wellenlängen elektromagnetischer Strahlung ausgestaltet sein, die anderen Farben jedoch nicht. Bei Beaufschlagung mit einem Laser, dessen Spektrum auch elektromagnetische Strahlung mit infraroter Wellenlänge aufweist, werden somit die blauen Linien abgetragen oder zumindest verändert, die Linien mit roter und grüner Farbe bleiben hingegen unverändert.

Eine optisch variable Struktur im Sinne dieser Erfindung ist eine Struktur, deren visuelles Erscheinungsbild sich bei Verkippen des Elements ändert. Beispielsweise ändert sich bei Verkippen der optisch variablen Struktur deren Farbe, bewegt sich scheinbar ein Balken von einer Seite des Elements zu einer anderen Seite, werden beim Verkippen unterschiedliche Zeichen dargestellt oder ergibt sich ein sogenannter Pumpeffekt in Form einer sich vergrößernden oder verkleinernden Umrisslinie eines Bildmotivs.

Das Substrat besteht besonders bevorzugt aus Papier aus Baumwollfasern, wie es beispielsweise für Banknoten verwendet wird, oder aus anderen natürlichen Fasern oder aus Synthesefasern oder einer Mischung aus natürlichen und synthetischen Fasern. Weiterhin bevorzugt besteht das Substrat aus einer Kombination aus mindestens zwei übereinander angeordneten und miteinander verbundenen unterschiedlichen Substraten, einem sogenannten Hybrid. Hierbei besteht das Substrat beispielsweise aus einer Kombination Kunststofffolie-Papier-Kunststofffolie, d.h. ein Substrat aus Papier wird auf jeder seiner beiden Seiten durch eine Kunststofffolie bedeckt, oder aus einer Kombination Papier-Kunststofffolie-Papier, d.h. ein Substrat aus einer Kunststofffolie wird auf jeder seiner beiden Seiten durch Papier bedeckt.

Angaben zum Gewicht des verwendeten Substrats sind beispielsweise in der Schrift DE 102 43 653 A9 angegeben, deren Ausführungen diesbezüglich vollumfänglich in diese Anmeldung aufgenommen werden. Die Schrift DE 102 43 653 A9 führt insbesondere aus, dass die Papierschicht üblicherweise ein Gewicht von 50 g/m² bis 100 g/m² aufweist, vorzugsweise von 80 g/m² bis 90 g/m². Selbstverständlich kann je nach Anwendung jedes andere geeignete Gewicht eingesetzt werden.

Wertdokumente, in denen ein mit dem erfindungsgemäßen Verfahren hergestelltes Substrat bzw. Sicherheitselement verwendet werden kann, sind insbesondere Banknoten, Aktien, Anleihen, Urkunden, Gutscheine, Schecks, hochwertige Eintrittskarten, aber auch andere fälschungsgefährdete Papiere, wie Pässe und sonstige Ausweisdokumente, sowie Karten, wie beispielsweise Kredit- oder Debitkarten, deren Kartenkörper mindestens eine Lage eines Sicherheitspapiers aufweist, und auch Produktsicherungselemente, wie Etiketten, Siegel, Verpackungen, Beipackzettel und dergleichen.

Es versteht sich, dass die vorstehend genannten und die nachfolgend noch zu erläuternden Merkmale nicht nur in den angegebenen Kombinationen, sondern auch in anderen Kombinationen einsetzbar sind, ohne den Rahmen der vorliegenden Erfindung zu verlassen, soweit dies von dem Schutzumfang der Ansprüche erfasst ist.

Anhand der nachfolgenden Ausführungsbeispiele und der ergänzenden Figuren werden die Vorteile der Erfindung erläutert. Die Ausführungsbeispiele stellen bevorzugte Ausführungsformen dar, auf die jedoch die Erfindung in keinerlei Weise beschränkt sein soll. Des Weiteren sind die Darstellungen in den Figuren des besseren Verständnisses wegen stark schematisiert und spiegeln nicht die realen Gegebenheiten wieder. Insbesondere entsprechen die in den Figuren gezeigten Proportionen nicht den in der Realität vorliegenden Verhältnissen und dienen ausschließlich zur Verbesserung der Anschaulichkeit. Des Weiteren sind die in den folgenden Ausführungsbeispielen beschriebenen Ausführungsformen der besseren Verständlichkeit wegen auf die wesentlichen Kerninformationen reduziert. Bei der praktischen Umsetzung können wesentlich komplexere Muster oder Bilder zur Anwendung kommen.

Im Einzelnen zeigen schematisch:
- Fig. 1: ein erstes Ausführungsbeispiel der Erfindung in Draufsicht,
- Fig. 2: einen vergrößerten Ausschnitt aus Fig. 1,
- Fig. 3: das Ausführungsbeispiel aus Fig. 1 in Seitenansicht und hierbei in Fig. 3a vor einer Laserung und in Fig. 3b nach einer Laserung,
- Fig. 4: ein zweites Ausführungsbeispiel der Erfindung in Draufsicht.

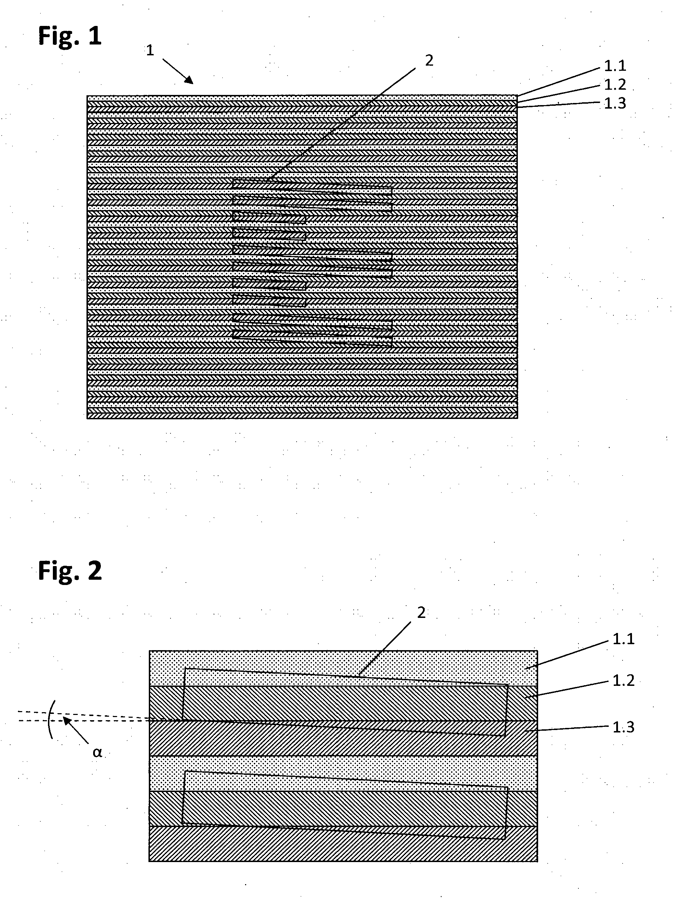

Die Fig. 1 zeigt in Draufsicht (senkrechte Betrachtung auf das Substrat) schematisch ein erfindungsgemäßes Sicherheitselement 1 mit einer optisch variablen Struktur, die aus einer Beschichtung aus einem Raster von linienförmigen und parallel zueinander angeordneten Elementen 1.1, 1.2 und 1.3 und aus linienförmigen Strukturelementen 2 besteht. Die linienförmigen Strukturelemente 2 sind mit einem Winkel von α = 3° zu den linienförmigen Elementen 1.1, 1.2 und 1.3 der Beschichtung angeordnet, so dass der Kippeffekt durch einen Moire-Effekt erzeugt wird.

Die Gesamtheit aller linienförmigen Strukturelemente 2 ergibt für einen Betrachter eine Information in Form einer alphanumerischen Abbildung des Buchstaben "E".

Die Beschichtung besteht bevorzugt aus einer alternierenden Folge von drei linienförmigen Elementen 1.1, 1.2 und 1.3 in den Druckfarben Cyan, Gelb und Magenta oder anderen Farben, die für elektromagnetische Strahlung des infraroten Wellenlängenbereichs transparent sind, sogenannte Standard IRT-Farben, und eine Farbdichte von bevorzugt mindestens 0,4 * log (1/R) aufweisen, wobei R die Remission bzw. der Remissionsgrad ist. Der Remissionsgrad ist bekanntlich das Verhältnis der von einer Oberfläche remittierten Leuchtdichte in Messrichtung zu der Leuchtdichte einer Oberfläche in Referenzweiß.

Bei den Figuren können die in Wirklichkeit farbigen Liniendarstellungen nur in Schwarz-Weiß dargestellt werden, so dass die farbigen Linien in Fig. 1 bis Fig. 4 als schraffierte oder gemusterte Flächen dargestellt werden.

Fig. 2 zeigt einen vergrößerten Ausschnitt der Fig. 1. Für eines der Strukturelemente 2 ist hierbei exemplarisch für die anderen Strukturelemente der Winkel α gegenüber dem linienförmigen Element 1.2 angegeben.

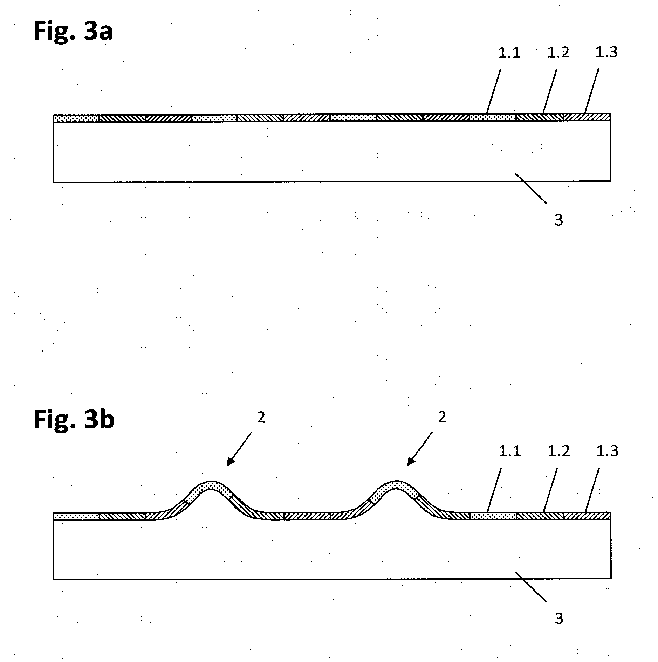

Fig. 3 zeigt in Seitenansicht ein Substrat 3, auf das das Raster von linienförmigen Elementen 1.1, 1.2 und 1.3 aus Fig. 1 aufgebracht oder aufgedruckt ist.

Fig. 3a zeigt das Substrat vor der Einwirkung des Laserstrahls und Fig. 3b nach der Einwirkung des Laserstrahls. Der Laserstrahl wurde dabei so über die Oberfläche des Substrats geführt, dass Strukturelemente 2 in Form von Erhöhungen entstehen.

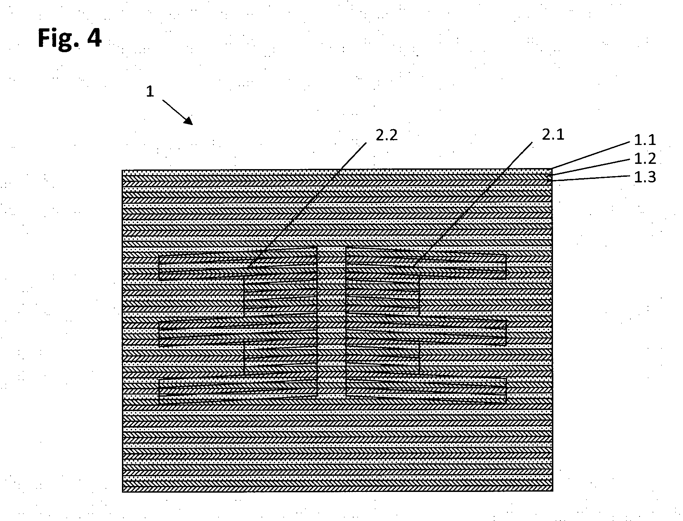

Fig. 4 zeigt das Sicherheitselement 1 aus Fig. 1 mit zwei benachbart zueinander angeordneten linienförmigen Strukturelementen 2.1 und 2.2 in Draufsicht. Die Strukturelemente 2.1 entsprechen den Strukturelementen 2 aus Fig. 1 und sind mit einem Winkel von α₁ = 3° zu den linienförmigen Elementen 1.1, 1.2 und 1.3 angeordnet. Die Strukturelemente 2.2 entsprechen ebenfalls den Strukturelementen 2 aus Fig. 1, sind jedoch spiegelbildlich zu diesen angeordnet, d.h. sie sind invertiert und mit einem Winkel von α₂ = - 3° = - α₁ zu den linienförmigen Elementen 1.1, 1.2 und 1.3 angeordnet.

Hierbei ergibt sich in dem ersten Bereich der Strukturelemente 2.1 bei Verkippen des Substrats ein Farbverlauf in eine erste Richtung und gleichzeitig im zweiten Bereich der Strukturelemente 2.2 ein Farbverlauf in eine zweite Richtung, wobei die zweite Richtung zu der ersten Richtung genau entgegengesetzt bzw. gegenläufig ist.

## Patentansprüche

1. Sicherheitselement (1) für ein Wertdokument, das aus einem Substrat (3) mit einer optisch variablen Struktur aus Strukturelementen (2, 2.1, 2.2) besteht, welche mit einer zur Oberfläche des Sicherheitselements (1) kontrastierenden Beschichtung so kombiniert sind, dass wenigstens Teilbereiche der Beschichtung bei Betrachtung aus einem ersten Betrachtungswinkelbereich sichtbar sind, bei Betrachtung unter einem zweiten Betrachtungswinkelbereich aber durch die Strukturelemente (2, 2.1, 2.2) zumindest teilweise verdeckt werden, so dass bei Kippen des Sicherheitselementes (1) um eine Achse ein Kippeffekt entsteht, **dadurch gekennzeichnet dass** die Strukturelemente (2, 2.1, 2.2) aus einer Volumenänderung der Oberfläche des Substrats (3) des Sicherheitselements (1) bestehen und aus einem Raster von linienförmigen, gegenüber der Oberfläche des Substrats (3) erhabenen Elementen bestehen und wobei die Beschichtung aus einem Raster von linienförmigen Elementen (1.1, 1.2, 1.3) besteht, wobei die linienförmigen Elemente der Beschichtung (1.1, 1.2, 1.3) bei senkrechter Betrachtung auf das Substrat (3) mit einem Winkel (α) von mindestens 1° zu den linienförmigen Elementen der Strukturelemente (2, 2.1, 2.2) angeordnet sind, so dass der Kippeffekt durch einen Moire-Effekt entsteht.

2. Sicherheitselement (1) nach Anspruch 1, **dadurch gekennzeichnet, dass** die Teilbereiche der Beschichtung, die bei Betrachtung aus einem ersten Betrachtungswinkelbereich sichtbar sind und bei Betrachtung unter einem zweiten Betrachtungswinkelbereich aber durch die Strukturelemente zumindest teilweise verdeckt werden, mindestens eine Information zeigen.

3. Sicherheitselement (1) nach mindestens einem der vorigen Ansprüche, **dadurch gekennzeichnet, dass** der Winkel (α) zwischen den linienförmigen Elementen der Strukturelemente (2, 2.1, 2.2) und den linienförmigen Elementen (1.1, 1.2, 1.3) der Beschichtung 1° bis 45°, bevorzugt 3° bis 40°, besonders bevorzugt 5° bis 35° und ganz besonders bevorzugt 10° bis 35° oder 15° bis 35° beträgt.

4. Sicherheitselement (1) nach Anspruch 3, **dadurch gekennzeichnet, dass** in einem ersten Bereich des Sicherheitselements (1) die linienförmigen Elemente (1.1, 1.2, 1.3) der Beschichtung bei senkrechter Betrachtung auf das Substrat (3) mit einem ersten Winkel α₁ zu den linienförmigen Elementen der Strukturelemente (2.1) angeordnet sind und in einem zweiten Bereich des Sicherheitselements die linienförmigen Elemente (1.1, 1.2, 1.3) der Beschichtung bei senkrechter Betrachtung auf das Substrat (3) mit einem zweiten Winkel α₂ = - α₁ zu den linienförmigen Elementen der Strukturelemente (2.2) angeordnet sind, wobei der erste Bereich und der zweite Bereich benachbart zueinander angeordnet sind.

5. Verfahren zur Herstellung eines Sicherheitselements (1), das aus einem Substrat (3) mit einer optisch variablen Struktur aus Strukturelementen (2, 2.1, 2.2) besteht, welche mit einer zur Oberfläche des Sicherheitselements (1) kontrastierenden Beschichtung so kombiniert sind, dass wenigstens Teilbereiche der Beschichtung bei Betrachtung aus einem ersten Betrachtungswinkelbereich sichtbar sind, bei Betrachtung unter einem zweiten Betrachtungswinkelbereich aber durch die Strukturelemente (2, 2.1, 2.2) zumindest teilweise verdeckt werden, so dass bei Kippen des Sicherheitselementes (1) um eine Achse ein Kippeffekt erzeugt wird, **dadurch gekennzeichnet dass** die Strukturelemente (2, 2.1, 2.2) durch eine Volumenänderung der Oberfläche des Substrats (3) des Sicherheitselements (1) erzeugt werden und aus einem Raster von linienförmigen, gegenüber der Oberfläche des Substrats erhabenen Elementen gebildet werden und die Beschichtung aus einem Raster von linienförmigen Elementen (1.1, 1.2, 1.3) gebildet wird, wobei die linienförmigen Elemente (1.1, 1.2, 1.3) der Beschichtung bei senkrechter Betrachtung auf das Substrat (3) mit einem Winkel (α) von mindestens 1° zu den linienförmigen Elementen der Strukturelemente (2, 2.1, 2.2) angeordnet werden, so dass der Kippeffekt durch einen Moire-Effekt erzeugt wird.

6. Verfahren nach Anspruch 5, **dadurch gekennzeichnet, dass** die Volumenänderung durch Aufschäumung oder Auffaserung des Substrats (3) erzeugt wird.

7. Verfahren nach Anspruch 5 oder 6, **dadurch gekennzeichnet, dass** die Volumenänderung durch einen Laserstrahl erzeugt wird.

8. Verfahren nach mindestens einem der Ansprüche 5 bis 7, **dadurch gekennzeichnet, dass** die Teilbereiche der Beschichtung, die bei Betrachtung aus einem ersten Betrachtungswinkelbereich sichtbar sind und bei Betrachtung unter einem zweiten Betrachtungswinkelbereich aber durch die Strukturelemente (2, 2.1, 2.2) zumindest teilweise verdeckt werden, mindestens eine Information zeigen.

9. Verfahren nach mindestens einem der Ansprüche 5 bis 8, **dadurch gekennzeichnet, dass** der Winkel (α) zwischen den linienförmigen Elementen der Strukturelemente (2, 2.1, 2.2) und den linienförmigen Elementen (1.1, 1.2, 1.3) der Beschichtung 1° bis 45°, bevorzugt 3° bis 40° und besonders bevorzugt 5° bis 35° beträgt.

10. Verfahren nach Anspruch 9, **dadurch gekennzeichnet, dass** in einem ersten Bereich des Sicherheitselements (1) die linienförmigen Elemente (1.1, 1.2, 1.3) der Beschichtung bei senkrechter Betrachtung auf das Substrat (3) mit einem ersten Winkel α₁ zu den linienförmigen Elementen der Strukturelemente (2.1) angeordnet werden und in einem zweiten Bereich des Sicherheitselements (1) die linienförmigen Elemente der Beschichtung (1.1, 1.2, 1.3) bei senkrechter Betrachtung auf das Substrat (3) mit einem zweiten Winkel α₂ = - α₁ zu den linienförmigen Elementen der Strukturelemente (2.2) angeordnet werden, wobei der erste Bereich und der zweite Bereich benachbart zueinander angeordnet werden.

11. Verfahren nach mindestens einem der Ansprüche 5 bis 10, **dadurch gekennzeichnet, dass** mindestens ein Teil der Beschichtung derart ausgebildet wird, dass in diesem Teil die Beschichtung durch den Laserstrahl verändert oder abgetragen wird.

## Claims

1. A security element (1) for a value document, consisting of a substrate (3) with an optically variable structure of structure elements (2, 2.1, 2.2) which are combined with a coating that contrasts to the surface of the security element (1) such that at least partial regions of the coating are visible upon viewing from a first viewing angle range, however upon viewing from a second viewing angle range are at least partially hidden by the structure elements (2, 2.1, 2.2), so that, upon tilting the security element (1) about an axis, a tilting effect arises, **characterized in that** the structure elements (2, 2.1, 2.2) consist of a volume change of the surface of the substrate (3) of the security element (1) and consist of a grid of linear elements that are raised relative to the surface of the substrate (3), and wherein the coating consists of a grid of linear elements (1.1, 1.2, 1.3), wherein the linear elements of the coating (1.1, 1.2, 1.3), upon perpendicular viewing onto the substrate (3), are arranged at an angle (α) of at least 1° relative to the linear elements of the structure elements (2, 2.1, 2.2), so that the tilting effect arises through a moiré effect.

2. The security element (1) according to claim 1, **characterized in that** the partial regions of the coating which are visible upon viewing from a first viewing angle range, however upon viewing from a second viewing angle range are at least partially hidden by the structure elements, show at least one information item.

3. The security element (1) according to at least one of the preceding claims, **characterized in that** the angle (α) between the linear elements of the structure elements (2, 2.1, 2.2) and the linear elements (1.1, 1.2, 1.3) of the coating amounts to 1° to 45°, preferably 3° to 40°, particularly preferably 5° to 35°, and very particularly preferably 10° to 35° or 15° to 35°.

4. The security element (1) according to claim 3, **characterized in that** in a first region of the security element (1) the linear elements (1.1, 1.2, 1.3) of the coating, upon perpendicular viewing onto the substrate, are arranged at a first angle α₁ relative to the linear elements of the structure elements (2.1), and in a second region of the security element the linear elements (1.1, 1.2, 1.3) of the coating, upon perpendicular viewing onto the substrate, are arranged at a second angle α₂ = -α₁ relative to the linear elements of the structure elements (2.2), wherein the first region and the second region are arranged adjacent to each other.

5. A method for manufacturing a security element (1) consisting of a substrate (3) with an optically variable structure of structure elements (2, 2.1, 2.2) which are combined with a coating that contrasts to the surface of the security element (1) such that at least partial regions of the coating are visible upon viewing from a first viewing angle range, however upon viewing from a second viewing angle range are at least partially hidden by the structure elements (2, 2.1, 2.2), so that, upon tilting the security element (1) about an axis, a tilting effect is produced, **characterized in that** the structure elements (2, 2.1, 2.2) are produced by a volume change of the surface of the substrate (3) of the security element (1) and are formed of a grid of linear elements that are raised in relation to the surface of the substrate, and the coating is formed of a grid of linear elements (1.1, 1.2, 1.3), wherein the linear elements (1.1, 1.2, 1.3) of the coating, upon perpendicular viewing onto the substrate (3), are arranged at an angle (α) of at least 1° relative to the linear elements of the structure elements (2, 2.1, 2.2), so that the tilting effect is produced by a moiré effect.

6. The method according to claim 5, **characterized in that** the volume change is produced by foaming or fraying of the substrate (3).

7. The method according to claim 5 or 6, **characterized in that** the volume change is produced by a laser beam.

8. The method according to any of the claims 5 to 7, **characterized in that** the partial regions of the coating which are visible upon viewing from a first viewing angle range, however upon viewing from a second viewing angle range are at least partially hidden by the structure elements (2, 2.1, 2.2), show at least one information item.

9. The method according to any of the claims 5 to 8, **characterized in that** the angle (α) between the linear elements of the structure elements (2, 2.1, 2.2) and the linear elements (1.1, 1.2, 1.3) of the coating amounts to 1° to 45°, preferably 3° to 40° and particularly preferably 5° to 35°.

10. The method according to claim 9, **characterized in that** in a first region of the security element (1) the linear elements (1.1, 1.2, 1.3) of the coating, upon perpendicular viewing onto the substrate (3), are arranged at a first angle α₁ relative to the linear elements of the structure elements (2.1), and in a second region of the security element (1) the linear elements (1.1, 1.2, 1.3) of the coating, upon perpendicular viewing onto the substrate (3), are arranged at a second angle α₂ = -α₁ relative to the linear elements of the structure elements (2.2), wherein the first region and the second region are arranged adjacent to each other.

11. The method according to at least one of claims 5 to 10, **characterized in that** at least part of the coating is configured such that the coating is changed or removed by the laser beam in this part.

## Revendications

1. Élément de sécurité (1) destiné à un document de valeur, consistant en un substrat (3) ayant une structure optiquement variable en éléments structurels (2, 2.1, 2.2) qui sont combinés de telle façon avec un revêtement contrastant avec la surface de l'élément de sécurité (1) qu'au moins des zones partielles du revêtement sont, lors d'une observation à partir d'une première zone d'angle d'observation, visibles, mais sont, lors d'une observation sous une deuxième zone d'angle d'observation, au moins partiellement recouvertes par les éléments structurels (2, 2.1, 2.2), de telle sorte que, lors d'un basculement de l'élément de sécurité (1) autour d'un axe, un effet de basculement est engendré, **caractérisé en ce que** les éléments structurels (2, 2.1, 2.2) consistent en une modification de volume de la surface du substrat (3) de l'élément de sécurité (1) et consistent en une trame d'éléments linéaires en saillie par rapport à la surface du substrat (3), et **en ce que** le revêtement consiste en une trame d'éléments linéaires (1.1, 1.2, 1.3), et **en ce que** les éléments linéaires du revêtement (1.1, 1.2, 1.3) sont, lors d'une observation perpendiculaire au substrat (3), agencés à un angle (α) d'au moins 1° par rapport aux éléments linéaires des éléments structurels (2, 2.1, 2.2), de telle sorte que l'effet de basculement est engendré par un effet de moiré.

2. Élément de sécurité (1) selon la revendication 1, **caractérisé en ce que** les zones partielles du revêtement qui sont, lors d'une observation à partir d'une première zone d'angle d'observation, visibles, mais qui sont, lors d'une observation sous une deuxième zone d'angle d'observation, au moins partiellement recouvertes par les éléments structurels, montrent au moins une information.

3. Élément de sécurité (1) selon au moins une des revendications précédentes, **caractérisé en ce que** l'angle (α) situé entre les éléments linéaires des éléments structurels (2, 2.1, 2.2) et les éléments linéaires (1.1, 1.2, 1.3) du revêtement se situe entre 1° et 45°, de préférence entre 3° et 40°, particulièrement de préférence entre 5° et 35°, et très particulièrement de préférence entre 10° et 35° ou entre 15° et 35°.

4. Élément de sécurité (1) selon la revendication 3, **caractérisé en ce que,** dans une première zone de l'élément de sécurité (1), les éléments linéaires (1.1, 1.2, 1.3) du revêtement sont, lors d'une observation perpendiculaire au substrat (3), agencés à un premier angle (α₁) par rapport aux éléments linéaires des éléments structurels (2.1), et **en ce que**, dans une deuxième zone de l'élément de sécurité, les éléments linéaires (1.1, 1.2, 1.3) du revêtement sont, lors d'une observation perpendiculaire au substrat (3), agencés à un deuxième angle α₂ = - α₁ par rapport aux éléments linéaires des éléments structurels (2.2), cependant que la première zone et la deuxième zone sont agencées de manière adjacente l'une à l'autre.

5. Procédé de fabrication d'un élément de sécurité (1) qui consiste en un substrat (3) ayant une structure optiquement variable en éléments structurels (2, 2.1, 2.2) qui sont combinés de telle façon avec un revêtement contrastant avec la surface de l'élément de sécurité (1) qu'au moins des zones partielles du revêtement sont, lors d'une observation à partir d'une première zone d'angle d'observation, visibles, mais sont, lors d'une observation sous une deuxième zone d'angle d'observation, au moins partiellement recouvertes par les éléments structurels (2, 2.1, 2.2), de telle sorte que, lors d'un basculement de l'élément de sécurité (1) autour d'un axe, un effet de basculement est engendré, **caractérisé en ce que** les éléments structurels (2, 2.1, 2.2) sont générés par une modification de volume de la surface du substrat (3) de l'élément de sécurité (1) et sont constitués par une trame d'éléments linéaires en saillie par rapport à la surface du substrat, et **en ce que** le revêtement est constitué par une trame d'éléments linéaires (1.1, 1.2, 1.3), cependant que les éléments linéaires (1.1, 1.2, 1.3) du revêtement sont, lors d'une observation perpendiculaire au substrat (3), agencés à un angle (α) d'au moins 1° par rapport aux éléments linéaires des éléments structurels (2, 2.1, 2.2), de telle sorte que l'effet de basculement est généré par un effet de moiré.

6. Procédé selon la revendication 5, **caractérisé en ce que** la modification de volume est générée par expansion ou par défibrage du substrat (3).

7. Procédé selon la revendication 5 ou 6, **caractérisé en ce que** la modification de volume est générée par un faisceau laser.

8. Procédé selon au moins une des revendications de 5 à 7, **caractérisé en ce que** les zones partielles du revêtement qui sont, lors d'une observation à partir d'une première zone d'angle d'observation, visibles, mais qui sont, lors d'une observation sous une deuxième zone d'angle d'observation, au moins partiellement recouvertes par les éléments structurels (2, 2.1, 2.2), montrent au moins une information.

9. Procédé selon au moins une des revendications de 5 à 8, **caractérisé en ce que** l'angle (α) situé entre les éléments linéaires des éléments structurels (2, 2.1, 2.2) et les éléments linéaires (1.1, 1.2, 1.3) du revêtement se situe entre 1° et 45°, de préférence entre 3° et 40°, et particulièrement de préférence entre 5° et 35°.

10. Procédé selon la revendication 9, **caractérisé en ce que,** dans une première zone de l'élément de sécurité (1), les éléments linéaires (1.1, 1.2, 1.3) du revêtement sont, lors d'une observation perpendiculaire au substrat (3), agencés à un premier angle (α₁) par rapport aux éléments linéaires des éléments structurels (2.1), et **en ce que**, dans une deuxième zone de l'élément de sécurité (1), les éléments linéaires du revêtement (1.1, 1.2, 1.3) sont, lors d'une observation perpendiculaire au substrat (3), agencés à un deuxième angle α₂ = - α₁ par rapport aux éléments linéaires des éléments structurels (2.2), cependant que la première zone et la deuxième zone sont agencées de manière adjacente l'une à l'autre.

11. Procédé selon au moins une des revendications de 5 à 10, **caractérisé en ce qu'**au moins une partie du revêtement est conçue de telle façon que, dans cette partie, le revêtement est modifié ou décapé par le faisceau laser.
